# EUROPEAN PATENT APPLICATION

(11) **EP 2 565 790 A1**
(43) Date of publication of application: **06.03.2013**
(21) Application number: 11460046.3
(22) Date of filing: 31.08.2011
(51) Int. Cl.: G06F 11/36

(54) **Method and system for injecting simulated errors**

(71) Applicant: Samsung Electronics Polska Spolka z organiczona odpowiedzialnoscia, 02-674 Warszawa (PL)
(72) Inventor: Sosnowski, Janusz, 00-665 Warszawa (PL); Gawkowski, Piotr, 00-665 Warszawa (PL); Pawelczyk, Przemyslaw, 00-665 Warszawa (PL); Krypa, Rafal, 00-633 Warszawa (PL); Gajda, Marcin, 00-633 Warszawa (PL)

(57) **Abstract**

A method of simulating errors in a software program when executed by a digital computer, is disclosed. The injection is performed from the kernel of an operational system into the tested software program. The method comprises the following steps: receiving the parameters of the fault injection experiment; and injecting simulated errors by generation of an output values indicating occurrences of faults.

A system is disclosed, the system made up of the experiment management client EMC (100), connected to the experiment management server EMS (112); and containing a software module (116) embedded into the kernel of the operating system (111). The EMC allows the setup of the fault injection and to collect, observe and analyze the results. The EMS is capable to interpret the configuration and to drive the experiment accordingly. The EMS communicates with the module (116). The module (116) is capable to interact with standard kernel modules (120) and to change error codes returned from modules (120), thus simulating the occurrence of faults to the tested software program (119).

## Description

The invention relates generally to software testing and more particularly to the injection of software faults into applications running under control of an operational system.

In the present invention faults are injected from the kernel of the operational system to applications.

The term "digital computer" is used both herein an in the Abstract as non-limiting and non-exhaustive; in particular it comprises embedded digital systems, smartphones, personal computers, computer systems, and other digital processing systems running software programs under control of an operational system.

The fault injection technique is a well known software testing tool. It consists in emulating faults in digital computers.

It may serve to detect errors in a software program when executed by a digital computer.

It may also serve to analyze the properties of the digital computer in early development phases, including prototyping, verification of design concepts, analysis of the system behavior, identification of bottlenecks and others.

It is a common practice in the industry to develop or adapt existing operational systems for digital computers.

A typical operational system provides a hardware abstraction layer and a number of low-level services for software programs, referred as applications.

Thus the same applications can be run on any hardware equipped with a compatible operational system.

Injecting faults into an operational system can provide information about the failure propagation and processing in applications.

One can find a survey of known techniques of fault injection in: Hsueh, Tsai and Iyer, "Fault Injection Techniques and Tools", Computer, April 1997, pages 75-82.

Fault injection method and system for the testing of digital computers are disclosed.

The present invention is primarily intended to simulate faults within the digital computer running a tested application under control of an operational system.

Three methods are commonly used for runtime fault injection. The time-out technique utilizes a timer, which timer expires at a predetermined time, triggering injection.

The exception technique injects the fault whenever certain condition or event occurs.

The code insertion technique performs fault injection by inserting additional instructions to the running software program.

In the first method the injection is not connected to the state of the digital computer, therefore producing unpredictable fault effects and program behavior.

In the second method the injected faults are better connected to the state of the digital computer.

In the third method, the fault injector is built into the application.

The present invention refers to a method of injecting faults where the faults
are triggered on a time basis,
are strongly connected to the state of the digital computer, and the method does not affect the code of the tested application.

In order that the disclosure will be readily understood, a more particular description of an exemplary embodiment of the present invention is described with the reference to the following figures:

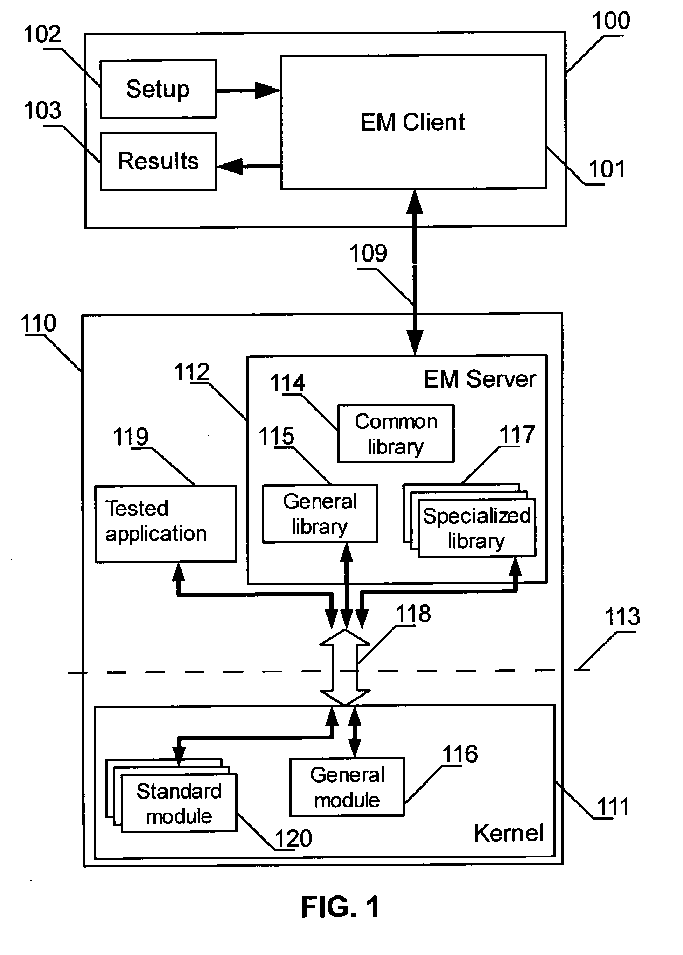

Figure 1 depicts schematically a fault injection system according to the present invention.
Figure 2 depicts a timeline of a fault injection test specific to the present invention.
Figure 3 depicts a timeline of a fault injection experiment, composed of a series of fault injection tests.

The experiment management unit 100 is connected to the digital computer under test 110 via the interface 109.

The experiment management unit 100 serves to control the fault injection process and to collect and analyze the results.

The experiment management unit 100 comprises the experiment management client software 101, which provides a human-readable interface to design fault injection experiments and to present the results to the operator.

Each fault injection experiment is described by means of configuration 102.

The results of the fault injection experiments are collected in the storage 103.

The interface 109 provides a bi-directional connection linking the experiment management unit 100 and the digital computer under test 110.

The interface 109 serves to pass the description of the fault injection experiment to the digital computer under test 110.

It also serves to transmit the runtime informations and the result from the digital computer under test 110 to the experiment management unit 100.

The digital computer under test 110 comprises the kernel 111 of an operational system and the experiment managment server 112. In a typical embodiment the kernel 111 is logically and, to some extent, physically separated from applications.

A line 113 schematically depicts the partition into the kernel and user space.

An interface 118 serves to pass request from an application running in the user space to the kernel of the operating system running in the kernel space.

The results of operations performed by the kernel are sent back to the application via the interface 118.

The interface 118 may also provide a bi-directional data flow between the kernel 111 and applications.

The experiment management server 112 comprises a common library 114, a general library 115 and, optionally, one or more specialized libraries 117.

The common library 114 interprets the description received from the experiment management client 101 and executes fault injection experiment accordingly. The common library 114 is also responsible for passing the results of fault injection experiments to the experiment management client 101.

The general library 115 utilizes the interface 118 to pass fault injection requests to the kernel 111.

The general module 116 is provided as a part of the kernel 111, either permanently embedded or attachable.

The general module 116 is capable to affect the results returned by one or more standard kernel modules 120 to the tested application 119.

In one embodiment of the present invention the experiment management server 112 is capable to start another application 119 and to intercept the output of the application 119.

Thus, output information from the application 119 can be passed to the experiment management client 101.

In another embodiment of the present invention, one or more specialized libraries 117 are provided to perform other methods of fault injection. For example, fault injection into network packages is possible in this extended case.

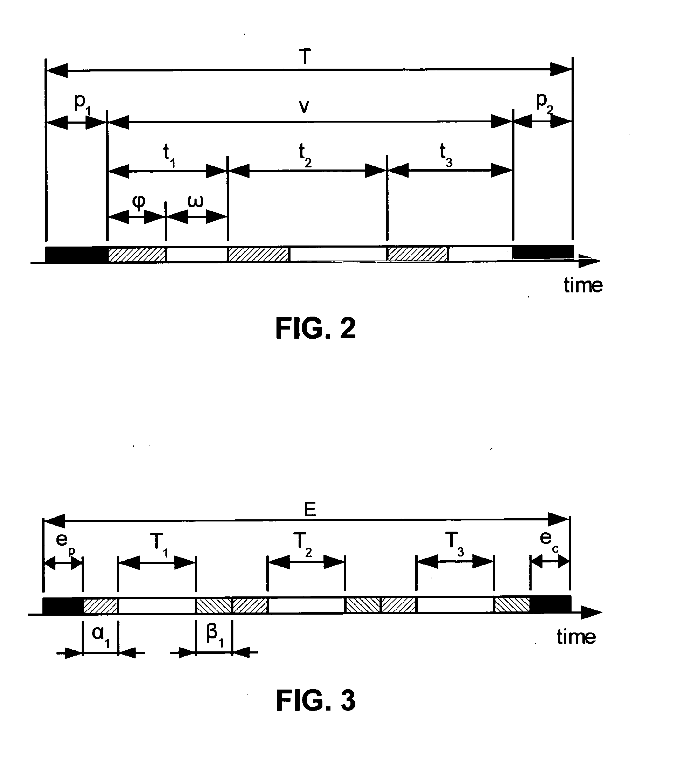

The general module 116 injects faults into results returned by the standard kernel module 120 to the tested application 119. The details of the fault injection method according to the present invention are depicted in figure 2 and in figure 3.

Figure 2 is a timeline of an exemplary test. The horizontal axis represents the passage of time. The period T encompasses test duration. Two protected periods are defined, p₁ and p₂. Within the protected periods no fault injection is possible.

The period v determines the vulnerability window. Within the vulnerability window the fault injection do occur. In each consecutive interval tₙ n=1,2,... there is a fault activity window ϕ and a remainig period w. Within the fault activity window ϕ faults of a given type are injected with a given probability distribution.

Within the remaining period w no faults are injected.

In another embodiment of the present invention, faults of a given type are injected permanently, instead of on probabilistic basis.

In still another embodiment, predefined patterns made of faults of different types are injected in each fault activity window ϕ.

The parameters of the test depicted in figure 2 are predetermined in the configuration 102.

Figure 3 depicts a sequence of tests from figure 2 arranged in an exemplary fault injection experiment.

The horizontal axis represents the passage of time. The period E encompasses experiment duration. The period eₚ corresponds to time used for a preparation to the experiment. The period e_{c} corresponds to time used for cleaning-up after the experiment. Both eₚ and e_{c} may be equal to zero.

Similar periods are predefined for each test Tᵢ i=1,2,... . The period αᵢ corresponds to execution time of a script or the application to be tested. The period (βᵢ correspons to time consumed by gathering the results to be returned to the experiment management client 101.

## Claims

1. A method for injecting simulated errors **characterized in that** the injection is performed from the kernel of an operational system into the tested software program running under control of said operational system.

2. The method of claim 1 comprising the steps of:
receiving the parameters of the fault injection experiment, said prameters including combinations of timing parameters, fault types, fault patterns, and probabilistic distribution of faults; and
accordingly to the received parameters, injecting faults by modification of error codes returned from the kernel of the operational system to the software program under test.

3. A system for testing a digital computer, including means (112) embedded into said digital computer; and
having means (100) connected to said digital computer via the interface (109); and
having a module (116) built into the kernel of an operating system (111); the module (116)
receiving parameters of the fault injection experiment, said prameters including combinations of timing parameters, fault types, fault patterns, and probabilistic distribution of faults; and
performing injection of faults by modifiaction of error codes returned from the kernel of the operational system (111) to the software program under test (119).
